# EUROPEAN PATENT SPECIFICATION

(11) **EP 4 371 729 B1**
(45) Date of publication and mention of the grant of the patent: **14.01.2026**
(21) Application number: 23209877.2
(22) Date of filing: 14.11.2023
(51) Int. Cl.: B29C 45/14, B29C 31/00, B29C 49/24, B65C 9/10, B65C 9/14, B65H 1/00, B65H 3/00, B65H 3/08

(54) **A DEVICE FOR IN-MOLD LABELING AN INJECTION-MOLDED PRODUCT**
VORRICHTUNG ZUM ETIKETTIEREN EINES SPRITZGEGOSSENEN PRODUKTS IN EINER FORM
DISPOSITIF D'ÉTIQUETAGE DANS LE MOULE D'UN PRODUIT MOULÉ PAR INJECTION

(30) Priority: 15.11.2022 NL 2033536
(43) Date of publication of application: 22.05.2024
(73) Proprietor: Gereedschappenfabriek Van den Brink B.V., 6732 BL Harskamp (NL)
(72) Inventor: VAN DE KIEFT, Jan Reinier, 6732 BL Harskamp (NL)
(74) Representative: V.O.

(56) References cited:
- EP-A2- 2 343 175
- WO-A1-85/04309

## Description

The invention relates to a device for in-mold labeling an injection-molded product, the device comprising a label magazine, the label magazine comprising a plurality of label storage stations, the label magazine comprising a support platform for supporting the plurality of label storage stations, each label storage station having a bottom and a number of vertically extending bars to define a label stacking column, the support platform having a top surface and the bottom of the label storage station having a lower surface facing the top surface.

Such a device is for example known from EP2343175A2. This known device has a label magazine comprising more than four label storage stations, a handling tool configured to handle more than four labels simultaneously, and a mold having more than four mold cavities, wherein the handling tool is configured to simultaneously remove more than four labels from the magazine, and to simultaneously position each of the labels in one of the mold cavities. Each of the label storage stations of the label magazine of the known device has a perimeter, where a number of vertically extending bars are disposed around the perimeter of the label storage station to define a label stacking column. In order to exactly position a label in a mold cavity amongst other thing the labels need to be correctly positioned in the label storage stations and the label storage stations need also to be correctly positioned in the label magazine such that the handling tool is able to correctly transfer the labels from the label storage stations to the mold cavities. In case the labels are not correctly positioned in a label storage station and/or a label storage station itself is not correctly positioned in the label magazine the position needs to be manually corrected which is cumbersome and requires a relative large amount of time. In addition, in case the label magazine is to be used with different kinds of labels, then in some cases all the label storage stations need to be repositioned. In the known device such repositioning is cumbersome and time consuming.

It is an object of the present invention to provide an alternative device for in-mold labeling an injection-molded product, in particular it is an object of the invention to provide a device for in-mold labeling an injection-molded product in which adjusting the position and/or orientation of a label storage station can be realized in an easy, preferably in a controlled and relatively fast manner.

According to the invention this object is obtained by providing a device for in-mold labeling an injection-molded product, the device comprising a label magazine, the label magazine comprising a plurality of label storage stations, the label magazine comprising a support platform for supporting the plurality of label storage stations, each label storage station having a bottom and a number of vertically extending bars to define a label stacking column, the support platform having a top surface and the bottom of the label storage station having a lower surface facing the top surface, characterized in that for each label storage station the support platform comprises three identical pneumatically operated adjusting units positioned in a line adjacent one another, each pneumatically operated adjusting unit comprising a cam disc having a spiral shaped groove, in that the lower surface of the bottom of the label storage station comprises three cam disc followers positioned adjacent one another, wherein the central cam disc follower is arranged to protrude in a left or right hand portion of the spiral shaped groove of the cam disc of the corresponding pneumatically operated adjusting unit for movement to the left or right of the bottom of the label storage station when seen in the direction of the line, and wherein the two outermost cam disc followers are arranged to protrude into a top portion of the spiral shaped groove of the cam disc of the corresponding pneumatically operated adjusting unit for movement of the bottom of the label storage station in directions transverse to the line in a plane of the lower surface of the bottom of the label storage station. By in accordance with the invention using three identical pneumatically operated adjusting units positioned in a line adjacent one another the position and/or orientation of a label storage station can be adjusted in an easy and relatively fast manner.

In an embodiment of a device for in-mold labeling an injection-molded product the cam disc of each pneumatically operated adjusting unit is fixedly connected to a rotatable wheel with teeth on the circumference, wherein the rotatable wheel is enclosed by an aperture formed in an adjusting plate, the edge of the aperture being provided with a number of teeth, wherein the pneumatically operated adjusting unit comprises two pneumatically operated single-acting short-stroke cylinders, wherein one of the two pneumatically operated single-acting short-stroke cylinders is arranged for moving the adjusting plate in directions transverse to the line in the plane of the lower surface of the bottom of the label storage station and wherein the other one of the two pneumatically operated single-acting short-stroke cylinders is arranged for moving the adjusting plate to the right or to the left when seen in the direction of the line such that the number of teeth of the edge of the aperture can be brought in engagement with the teeth on the circumference of the rotatable wheel for rotating the rotatable wheel and thus the cam disc for allowing adjustment the position of the bottom of the label storage station. Such a pneumatically operated adjusting unit can provide an accurate adjustment of the position and/or orientation of a label storage station and can furthermore be realized in a relatively easy manner.

In a further embodiment of a device for in-mold labeling an injection-molded product each label storage station of the plurality of label storage stations is connected with a label storage station valve to a pneumatic bus system, wherein the left pneumatically operated adjusting units of all the label storage stations are connected via a left valve to the pneumatic bus system, wherein the central pneumatically operated adjusting units of all the label storage stations are connected via a central valve to the pneumatic bus system and wherein the right pneumatically operated adjusting units of all the label storage stations are connected via a right valve to the pneumatic bus system. In this manner adjusting the position and/or orientation of the label storage stations can be realized in an easy and controlled manner.

The invention will be further explained with reference to the Figures, in which a non-limiting exemplary embodiment of according to the invention is shown:
Fig. 1 schematically in perspective shows an embodiment of a label magazine comprising a plurality of label storage stations of a device for in-mold labeling an injection-molded product according to the invention;
Fig. 2A schematically shows a top view of a label storage station of Figure 1, and Fig. 2B shows a side view of only the bottom of the label storage station and the support platform;
Fig. 3 schematically in perspective shows the three identical pneumatically operated adjusting units positioned in line adjacent one another for adjusting the position and/or orientation of the label storage station shown in Figure 2;
Fig. 4 schematically shows a top view of one of the pneumatically operated adjusting units shown in Figure 3;
Fig. 5 schematically shows a bottom view of the pneumatically operated adjusting unit shown in Figure 4;
Fig. 6 schematically in perspective shows the pneumatically operated adjusting unit shown in Figure 5, and
Fig. 7 schematically shows a top view of the pneumatically operated adjusting unit shown in Figure 5 with a closure plate removed for showing the rotatable wheel with teeth on the circumference.

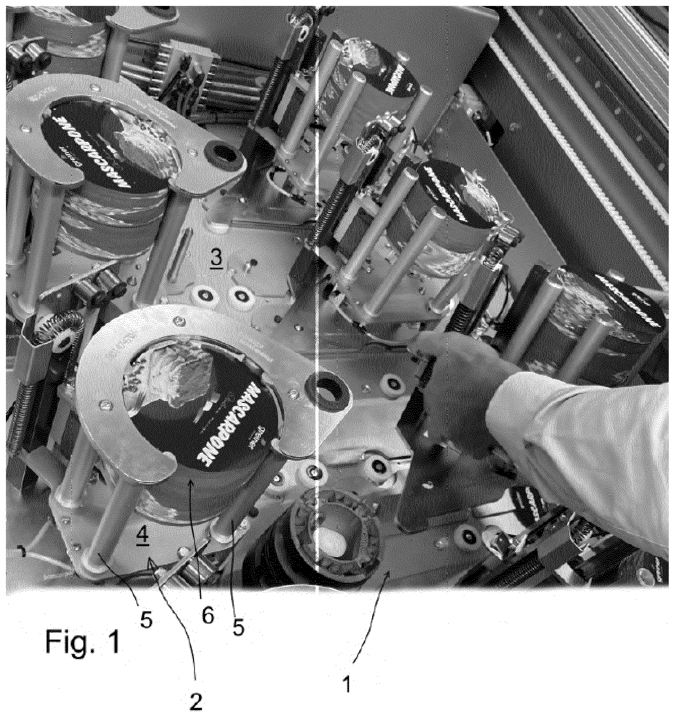

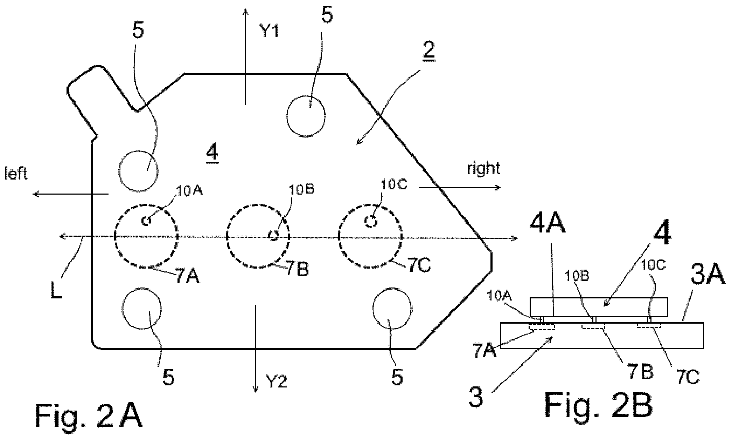

In Fig. 1 an embodiment of a label magazine 1 comprising a plurality of label storage stations 2 of a device for in-mold labeling an injection-molded product according to the invention is schematically shown in perspective. The label magazine 1 comprises a support platform 3 for supporting the plurality of label storage stations 2. Each label storage station 2 (see also Fig. 2) has a bottom 4 and a number of vertically extending bars 5 to define a label stacking column 6. The support platform 3 has a top surface 3A and the bottom 4 of the label storage station 2 has a lower surface 4A facing the top surface 3A of the support platform 3.

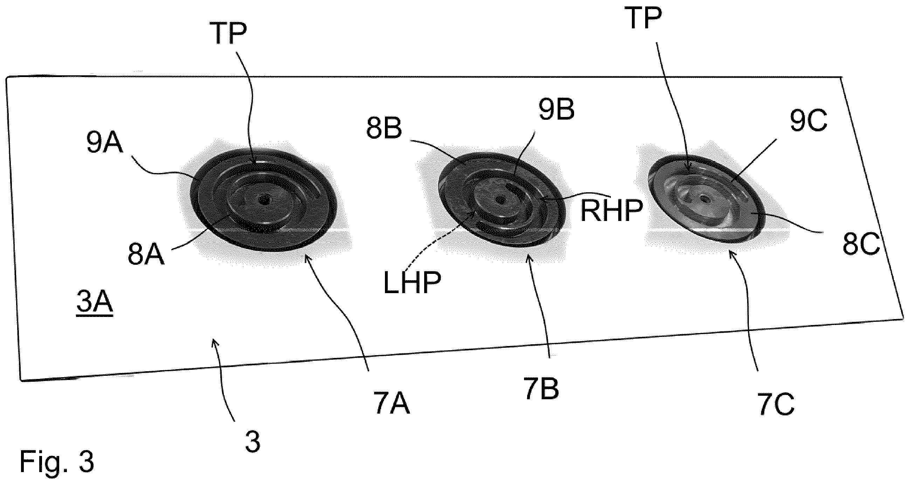

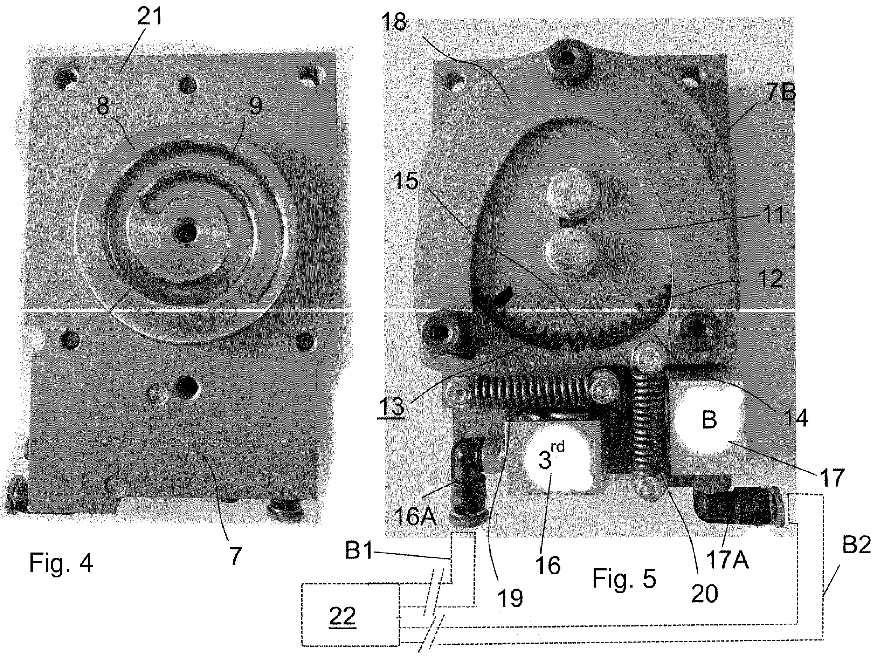

For each label storage station 2 the support platform 3 comprises three identical pneumatically operated adjusting units 7A, 7B, 7C positioned in line (indicated by the line L in Fig. 2A) adjacent one another, as indicated by the dashed lines in Figure 2, and shown in Figure 3. As shown in Figures 3 and 4 each pneumatically operated adjusting unit 7 (7A, 7B, 7C) comprises a cam disc 8 (8A, 8B, 8C) having a spiral shaped groove 9 (9A, 9B, 9C).

The lower surface 4A of the bottom 4 of the label storage station 2 comprises three cam disc followers 10A, 10B, 10C positioned adjacent one another as indicated in Figure 2A and 2B. The two outermost cam disc followers 10A, 10C are arranged to protrude into a top portion TP of the spiral shaped groove 9A, 9C of the cam disc 8A, 8C of the corresponding pneumatically operated adjusting unit 7A, 7C for movement of the bottom 4 of the label storage station 2 in the directions Y1 and Y2 (indicated by the arrows) transverse to the line L. As indicated in the embodiment shown in Fig. 3 the central cam disc follower 10B is arranged to protrude in a right hand portion RHP of the spiral shaped groove 9B of the cam disc 8B of the corresponding centrally located pneumatically operated adjusting unit 7B for movement to the left or right of the bottom 4 of the label storage station 2 when seen in the direction of the line L. Please note that in another embodiment the central cam disc follower 10B can be arranged to protrude in a left hand portion LHP of the spiral shaped groove 9B of the cam disc 8B of the corresponding centrally located pneumatically operated adjusting unit 7B. In addition it is observed that a rotation of the bottom 4 of the label storage station 2 can also be obtained by properly rotating the respective cam discs 8A-8C.

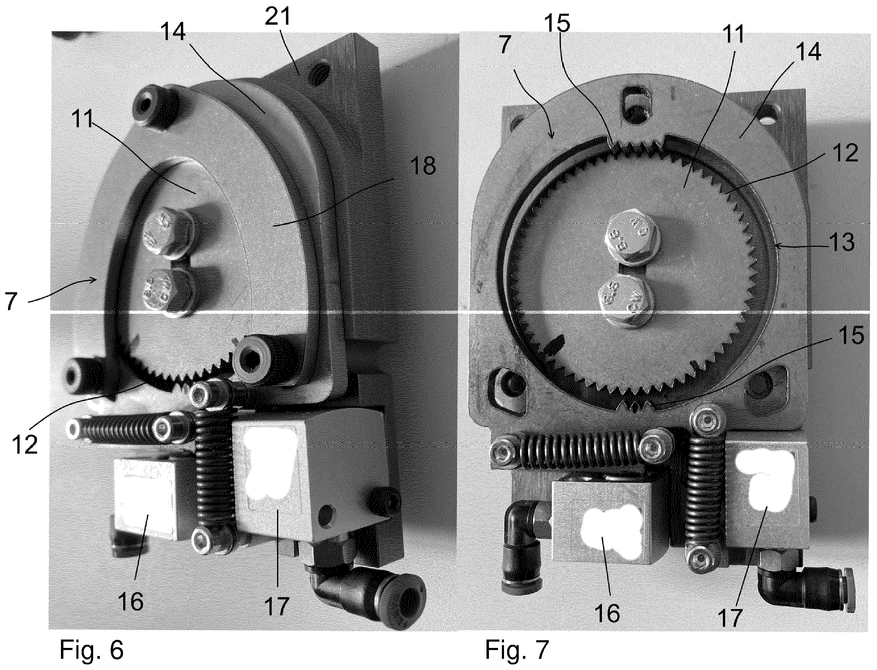

An embodiment of a construction of a pneumatically operated adjusting unit 7 will be described with reference to Figs. 4 to 7. Fig. 4 schematically shows a top view of a pneumatically operated adjusting unit 7, while Figs. 5, 6 and 7 schematically show a bottom view of the pneumatically operated adjusting unit 7. The cam disc 8 of the pneumatically operated adjusting unit 7 is fixedly connected to a rotatable wheel 11 with teeth 12 on its circumference. The rotatable wheel 11 is enclosed by an aperture 13 formed in an adjusting plate 14. A closure plate 18 encloses the adjusting plate 14 and the rotatable wheel 11. The inner edge of the aperture 13 is provided with a number of teeth 15, which can be provided on the complete inner edge or, as indicated in Fig. 7 (in which the closure plate is removed for showing the rotatable wheel and the teeth 15 of the adjusting plate more clearly), only a portion of the top and bottom of the edge of the aperture can be provided with a number of teeth 15. The pneumatically operated adjusting unit 7 comprises two pneumatically operated single-acting short-stroke cylinders 16, 17, wherein one pneumatically operated single-acting short-stroke cylinder 17 is arranged for moving the adjusting plate 14 in the direction Y1 or Y2 transverse to the line L and the other pneumatically operated single-acting short-stroke cylinder 16 is arranged for moving the adjusting plate 14 to the right or to the left when seen in the direction of the line L such that the 15 teeth of the inner edge of the aperture 13 can be brought in engagement with the teeth 12 on the circumference of the rotatable wheel 11 and for rotating the rotatable wheel 11. Since the rotatable wheel 11 is fixedly connected to the cam disc 8, operation of the pneumatically operated single-acting short-stroke cylinders 16, 17 results in a rotation of the spiral shaped groove 9 in which the cam follower 10 is inserted and thus rotation of the cam disc 8 allows adjustment of the position and orientation of the bottom 4 of the label storage station 2. As indicated in Figure 5 two springs 19, 20 are connected with one end on the adjusting plate 14, while the other end of the springs 19, 20 is fixedly connected to the "fixed world", i.e. a body 21 of the pneumatically operated adjusting unit 7 which body 21 is fixedly connected to the support platform 3.

In order to easily control the operation of all the pneumatically operated adjusting units 7 by a controller 22 (see Fig. 5) use is made of a specific connection of the pneumatically operated adjusting units 7 to a pneumatic bus system B1, B2 as will be elucidated below.

As described above each label storage station 2 has three identical pneumatically operated adjusting units 7A, 7B, 7C and each pneumatically operated adjusting unit 7 has two single-acting short-stroke cylinders 16, 17. Each label storage station 2 is connected with its own label storage station valve to the pneumatic bus system B1, B2. So, in the situation where the label magazine has eight label storage stations 2, there are eight label storage station valves. Further, the left pneumatically operated adjusting units 7A of all the label storage stations 2 are connected via a (single) left valve to the pneumatic bus system B1, B2, the central pneumatically operated adjusting units 7B of all the label storage stations 2 are connected via a (single) central valve to the pneumatic bus system B1, B2 and wherein the right pneumatically operated adjusting units 7C of all the label storage stations are connected via a (single) right valve to the pneumatic bus system B1, B2. This means that independent on the number of label storage stations 2, only three additional valves are required, i.e. the left, the central and the right valve. For example, for eight label storage stations in total eleven valves are required, i.e. the eight label storage station valves, the left, the central and the right valve. An example of operating the pneumatically operated adjusting units by the control unit 22 will be shortly discussed with reference to Figure 5. Assuming that the pneumatically operated adjusting unit depicted in Figure 5 is the central pneumatically operated adjusting unit 7B and the label storage station 2 it belongs to is the third (3^{rd}) one of in total eight label storage stations, then in case the cam disc of this central pneumatically operated adjusting unit 7B is to be rotated to the left (i.e. counter clockwise) then the control unit 22 switches the valves as follows:
- Central Valve "B" ON
- label storage station Valve "3^{rd}" ON
- Central Valve "B" OFF
- label storage station Valve "3^{rd}" OFF

After this action this central pneumatically operated adjusting unit 7B is turned one step to the left.

In case the cam disc of this central pneumatically operated adjusting unit 7B is to be rotated to the right (i.e. clockwise) then the control unit 22 switches the valves as follows:
- label storage station Valve "3^{rd}" ON
- Central Valve "B" ON
- label storage station Valve "3^{rd}" OFF
- Central Valve "B" OFF

After this action this central pneumatically operated adjusting unit 7B is turned one step to the right. In this manner adjusting the position and/or orientation of the label storage stations can be realized in an easy and controlled manner with a relatively small number of pneumatically operated adjusting units and valves.

## Claims

1. A device for in-mold labeling an injection-molded product, the device comprising a label magazine (1), the label magazine (1) comprising a plurality of label storage stations (2), the label magazine (1) comprising a support platform (3) for supporting the plurality of label storage stations (2), each label storage station (2) having a bottom (4) and a number of vertically extending bars (5) to define a label stacking column (6), the support platform (3) having a top surface (3A) and the bottom (4) of the label storage station (2) having a lower surface (4A) facing the top surface (3A), **characterized in that** for each label storage station (2) the support platform (3) comprises three identical pneumatically operated adjusting units (7A, 7B, 7C) positioned in a line (L) adjacent one another, each pneumatically operated adjusting unit (7A, 7B, 7C) comprising a cam disc (8; 8A, 8B, 8C) having a spiral shaped groove (9; 9A, 9B, 9C), **in that** the lower surface (4A) of the bottom (4) of the label storage station (2) comprises three cam disc followers (10A, 10B, 10C) positioned adjacent one another, wherein the central cam disc follower (10B) is arranged to protrude in a left or right hand portion (LHP, RHP) of the spiral shaped groove (9; 9A, 9B, 9C) of the cam disc (8; 8A, 8B, 8C) of the corresponding pneumatically operated adjusting unit (7A, 7B, 7C) for movement to the left or right of the bottom (4) of the label storage station (2) when seen in the direction of the line (L), and wherein the two outermost cam disc followers (10A, 10C) are arranged to protrude into a top portion (TP) of the spiral shaped groove (9; 9A, 9B, 9C) of the cam disc (8; 8A, 8B, 8C) of the corresponding pneumatically operated adjusting unit (7A, 7B, 7C) for movement of the bottom (4) of the label storage station (2) in directions transverse to the line (L) in a plane of the lower surface (4A) of the bottom (4) of the label storage station (2).

2. A device according to claim 1, wherein the cam disc (8; 8A, 8B, 8C) of each pneumatically operated adjusting unit (7A, 7B, 7C) is fixedly connected to a rotatable wheel (11) with teeth (12) on the circumference, wherein the rotatable wheel (11) is enclosed by an aperture (13) formed in an adjusting plate (14), the edge of the aperture (13) being provided with a number of teeth (15), wherein the pneumatically operated adjusting unit (7A, 7B, 7C) comprises two pneumatically operated single-acting short-stroke cylinders (16, 17), wherein one (17) of the two pneumatically operated single-acting short-stroke cylinders (16, 17) is arranged for moving the adjusting plate (14) in directions (Y1, Y2) transverse to the line (L) in the plane of the lower surface (4A) of the bottom (4) of the label storage station (2) and wherein the other one (16) of the two pneumatically operated single-acting short-stroke cylinders (16, 17) is arranged for moving the adjusting plate (14) to the right or to the left when seen in the direction of the line (L) such that the number of teeth (15) of the edge of the aperture (13) can be brought in engagement with the teeth (12) on the circumference of the rotatable wheel (11) for rotating the rotatable wheel (11) and thus the cam disc (8; 8A, 8B, 8C) for allowing adjustment the position of the bottom (4) of the label storage station (2).

3. A device according to claim 2, wherein each label storage station (2) of the plurality of label storage stations (2) is connected with a label storage station (2) valve to a pneumatic bus system (B1, B2), wherein the left pneumatically operated adjusting units (7A, 7B, 7C) of all the label storage stations (2) are connected via a left valve to the pneumatic bus system (B1, B2), wherein the central pneumatically operated adjusting units (7A, 7B, 7C) of all the label storage stations (2) are connected via a central valve to the pneumatic bus system (B1, B2) and wherein the right pneumatically operated adjusting units (7A, 7B, 7C) of all the label storage stations (2) are connected via a right valve to the pneumatic bus system (B1, B2).

## Patentansprüche

1. Einichtung zum Etikettieren eines spritzgegossenen Produkts in einer Form, wobei die Vorrichtung ein Etikettenmagazin (1) aufweist, das Etikettenmagazin (1) eine Mehrzahl an Etikettenaufbewahrungsstationen (2) aufweist, das Etikettenmagazin (1) eine Trägerplattform (3) zum Tragen der Mehrzahl an Etikettenaufbewahrungsstationen (2) aufweist, jede Etikettenaufbewahrungsstation (2) einen Boden (4) und eine Anzahl sich vertikal erstreckender Stangen (5) aufweist, um eine Etikettenstapelsäule (6) zu definieren, die Trägerplattform (3) eine obere Fläche (3A) aufweist und der Boden (4) der Etikettenaufbewahrungsstation (2) eine der oberen Fläche (3A) zugewandte untere Fläche (4A) aufweist, **dadurch gekennzeichnet, dass** für jede Etikettenaufbewahrungsstation (2) die Trägerplattform (3) drei identische, pneumatisch betätigte Einstelleinheiten (7A, 7B, 7C) aufweist, die einander benachbart in einer Linie (L) positioniert sind, wobei jede pneumatisch betätigte Einstelleinheit (7A, 7B, 7C) eine Nockenscheibe (8; 8A, 8B, 8C) mit einer spiralförmigen Nut (9; 9A, 9B, 9C) aufweist, **dadurch, dass** die untere Fläche (4A) des Bodens (4) der Etikettenaufbewahrungsstation (2) drei einander benachbart positionierte Nockenscheibenmitnehmer (10A, 10B, 10C) aufweist, wobei der mittlere Nockenscheibenmitnehmer (10B) so angeordnet ist, dass er in einem linken oder rechten Abschnitt (LHP, RHP) der spiralförmigen Nut (9; 9A, 9B, 9C) der Nockenscheibe (8; 8A, 8B, 8C) der entsprechenden pneumatisch betätigten Einstelleinheit (7A, 7B, 7C) zur Bewegung nach links oder rechts des Bodens (4) der Etikettenaufbewahrungsstation (2), betrachtet in Richtung der Linie (L), vorsteht, und wobei die beiden äußersten Nockenscheibenmitnehmer (10A, 10C) so angeordnet sind, dass sie in einen oberen Abschnitt (TP) der spiralförmigen Nut (9; 9A, 9B, 9C) der Nockenscheibe (8; 8A, 8B, 8C) der entsprechenden pneumatisch betätigten Einstelleinheit (7A, 7B, 7C) zur Bewegung des Bodens (4) der Etikettenaufbewahrungsstation (2) in Richtungen quer zur Linie (L) in einer Ebene der unteren Fläche (4A) des Bodens (4) der Etikettenaufbewahrungsstation (2) vorstehen.

2. Einrichtung nach Anspruch 1, wobei die Nockenscheibe (8; 8A, 8B, 8C) jeder pneumatisch betätigten Einstelleinheit (7A, 7B, 7C) fest mit einem drehbaren Rad (11) mit Zähnen (12) auf dem Umfang verbunden ist, wobei das drehbare Rad (11) von einer in einer Einstellplatte (14) ausgebildeten Öffnung (13) umschlossen ist, wobei der Rand der Öffnung (13) mit einer Anzahl von Zähnen (15) versehen ist, wobei die pneumatisch betätigte Einstelleinheit (7A, 7B, 7C) zwei pneumatisch betätigte, einfachwirkende Kurzhubzylinder (16, 17) aufweist, wobei einer (17) der beiden pneumatisch betätigten, einfachwirkenden Kurzhubzylinder (16, 17) zum Bewegen der Einstellplatte (14) in Richtungen (Y1, Y2) quer zur Linie (L) in der Ebene der unteren Fläche (4A) des Bodens (4) der Etikettenaufbewahrungsstation (2) angeordnet ist und wobei der andere (16) der beiden pneumatisch betätigten, einfachwirkenden Kurzhubzylinder (16, 17) zum Bewegen der Einstellplatte (14) nach links oder rechts, betrachtet in Richtung der Linie (L), angeordnet ist, sodass die Anzahl der Zähne (15) des Randes der Öffnung (13) mit den Zähnen (12) auf dem Umfang des drehbaren Rades (11) zum Drehen des drehbaren Rades (11) und damit der Nockenscheibe (8; 8A, 8B, 8C) in Eingriff gebracht werden kann, um ein Einstellen der Position des Bodens (4) der Etikettenaufbewahrungsstation (2) zu erlauben.

3. Einrichtung nach Anspruch 2, wobei jede Etikettenaufbewahrungsstation (2) der Mehrzahl an Etikettenaufbewahrungsstationen (2) über ein Ventil einer Etikettenaufbewahrungsstation (2) mit einem pneumatischen Bussystem (B1, B2) verbunden ist, wobei die linken pneumatisch betätigten Einstelleinheiten (7A, 7B, 7C) aller Etikettenaufbewahrungsstationen (2) über ein linkes Ventil mit dem pneumatischen Bussystem (B1, B2) verbunden sind, wobei die mittleren pneumatisch betätigten Einstelleinheiten (7A, 7B, 7C) aller Etikettenaufbewahrungsstationen (2) über ein mittleres Ventil mit dem pneumatischen Bussystem (B1, B2) verbunden sind und wobei die rechten pneumatisch betätigten Einstelleinheiten (7A, 7B, 7C) aller Etikettenaufbewahrungsstationen (2) über ein rechtes Ventil mit dem pneumatischen Bussystem (B1, B2) verbunden sind.

## Revendications

1. Dispositif d'étiquetage dans le moule d'un produit moulé par injection, le dispositif comprenant un chargeur d'étiquettes (1), le chargeur d'étiquettes (1) comprenant une pluralité de stations de stockage d'étiquettes (2), le chargeur d'étiquettes (1) comprenant une plateforme de support (3) destinée à supporter la pluralité de stations de stockage d'étiquettes (2), chaque station de stockage d'étiquettes (2) présentant un fond (4) et un nombre de barres s'étendant verticalement (5) pour définir une colonne d'empilage d'étiquettes (6), la plateforme de support (3) présentant une surface supérieure (3A) et le fond (4) de la station de stockage d'étiquettes (2) présentant une surface inférieure (4A) orientée vers la surface supérieure (3A), **caractérisé en ce que** pour chaque station de stockage d'étiquettes (2) la plateforme de support (3) comprend trois unités de réglage à commande pneumatique identiques (7A, 7B, 7C) positionnées dans une ligne (L) adjacentes les unes aux autres, chaque unité de réglage à commande pneumatique (7A, 7B, 7C) comprenant un disque à cames (8 ; 8A, 8B, 8C) présentant une rainure en forme de spirale (9 ; 9A, 9B, 9C), **en ce que** la surface inférieure (4A) du fond (4) de la station de stockage d'étiquettes (2) comprend trois suiveurs de disque à cames (10A, 10B, 10C) positionnés adjacents les uns aux autres, dans lequel le suiveur de disque à cames central (10B) est agencé pour faire saillie dans une partie gauche ou droite (LHP, RHP) de la rainure en forme de spirale (9 ; 9A, 9B, 9C) du disque à cames (8 ; 8A, 8B, 8C) de l'unité de réglage à commande pneumatique correspondante (7A, 7B, 7C) pour le déplacement vers la gauche ou la droite du fond (4) de la station de stockage d'étiquettes (2) dans une vue dans la direction de la ligne (L), et dans lequel les deux suiveurs de disque à cames les plus extérieurs (10A, 10C) sont agencés pour faire saillie dans une partie supérieure (TP) de la rainure en forme de spirale (9 ; 9A, 9B, 9C) du disque à cames (8 ; 8A, 8B, 8C) de l'unité de réglage à commande pneumatique correspondante (7A, 7B, 7C) pour le déplacement du fond (4) de la station de stockage d'étiquettes (2) dans des directions transversales à la ligne (L) dans un plan de la surface inférieure (4A) du fond (4) de la station de stockage d'étiquettes (2).

2. Dispositif selon la revendication 1, dans lequel le disque à cames (8 ; 8A, 8B, 8C) de chaque unité de réglage à commande pneumatique (7A, 7B, 7C) est relié de manière fixe à une roue rotative (11) avec des dents (12) sur la circonférence, dans lequel la roue rotative (11) est enfermée par une ouverture (13) formée dans une plaque de réglage (14), le bord de l'ouverture (13) étant doté d'un nombre de dents (15), dans lequel l'unité de réglage à commande pneumatique (7A, 7B, 7C) comprend deux vérins à course courte et à simple effet à commande pneumatique (16, 17), dans lequel l'un (17) des deux vérins à course courte et à simple effet à commande pneumatique (16, 17) est agencé pour déplacer la plaque de réglage (14) dans des directions (Y1, Y2) transversales à la ligne (L) dans le plan de la surface inférieure (4A) du fond (4) de la station de stockage d'étiquettes (2) et dans lequel l'autre (16) des deux vérins à course courte et à simple effet à commande pneumatique (16, 17) est agencé pour déplacer la plaque de réglage (14) vers la droite ou vers la gauche dans une vue dans la direction de la ligne (L) de sorte que le nombre de dents (15) du bord de l'ouverture (13) puisse être mis en prise avec les dents (12) sur la circonférence de la roue rotative (11) pour faire tourner la roue rotative (11) et ainsi le disque à cames (8 ; 8A, 8B, 8C) pour permettre le réglage de la position du fond (4) de la station de stockage d'étiquettes (2).

3. Dispositif selon la revendication 2, dans lequel chaque station de stockage d'étiquettes (2) de la pluralité de stations de stockage d'étiquettes (2) est reliée avec une soupape de station de stockage d'étiquettes (2) à un système de bus pneumatique (B1, B2), dans lequel les unités de réglage à commande pneumatique gauches (7A, 7B, 7C) de toutes les stations de stockage d'étiquettes (2) sont reliées via une soupape gauche au système de bus pneumatique (B1, B2), dans lequel les unités de réglage à commande pneumatique centrales (7A, 7B, 7C) de toutes les stations de stockage d'étiquettes (2) sont reliées via une soupape centrale au système de bus pneumatique (B1, B2) et dans lequel les unités de réglage à commande pneumatique droites (7A, 7B, 7C) de toutes les stations de stockage d'étiquettes (2) sont reliées via une soupape droite au système de bus pneumatique (B1, B2).
